(19) Europäisches Patentamt
European Patent Office
Office européen des brevets

(11) Veröffentlichungsnummer: **0 108 991**
**B1**

(12) # EUROPÄISCHE PATENTSCHRIFT

(45) Veröffentlichungstag der Patentschrift: **13.08.86**

(51) Int. Cl.⁴: **C 08 B 1/08,** C 08 B 11/00

(21) Anmeldenummer: **83110871.7**

(22) Anmeldetag: **31.10.83**

(54) **Verfahren zur Herstellung von Celluloseethern aus mit Ammoniak aktivierter Cellulose.**

(30) Priorität: **11.11.82 DE 3241720**

(43) Veröffentlichungstag der Anmeldung:
**23.05.84 Patentblatt 84/21**

(45) Bekanntmachung des Hinweises auf die Patenterteilung:
**13.08.86 Patentblatt 86/33**

(84) Benannte Vertragsstaaten:
**AT BE CH DE FR GB IT LI NL SE**

(56) Entgegenhaltungen:
**GB-A-463 056**
**US-A-2 145 273**
**US-A-2 157 083**
**US-A-2 294 925**

**CHEMICAL ABSTRACTS, Band 96, Nr. 26, Juni 1982, Seite 108, Nr. 219564c, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Bredereck, Karl, Prof. Dr., Gaussstrasse 2a, D-7000 Stuttgart 1 (DE)**
Erfinder: **Togelang, Emy c/o Fam. Wolf, Am Kalkofen 24, D-7483 Inzikofen (DE)**

**EP 0 108 991 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung von wasserlöslichen Celluloseethern durch Alkalisierung und Veretherung von mit Ammoniak aktivierter Cellulose.

Die Herstellung von Celluloseethern mit einheitlichen oder unterschiedlichen Arten von Ethersubstituenten ist bekannt (siehe z. B. Ullmanns Encyklopädie der technischen Chemie, Band 9, Stichwort "Celluloseäther", Verlag Chemie - Weinheim, 4. Auflage 1975, S. 192 ff.), wobei diese im allgemeinen entweder a) nach dem Prinzip der Ethersynthese nach Williamson durch Umsetzung von Cellulose mit Alkyl- oder Aralkylhalogeniden (unter Verbrauch einer Base) und/oder b) bzw. c) durch Umsetzung von Cellulose mit aktivierten Reaktionspartnern (in Anwesenheit katalytischer Mengen einer Base) hergestellt werden:

a) $\text{Cell-}\underline{\overline{O}}\text{-H} + \text{Hal-R}^1 + \text{BOH}$

$$\longrightarrow \text{Cell-}\underline{\overline{O}}\text{-R}^1 + H_2O + \text{BHal}$$

b) 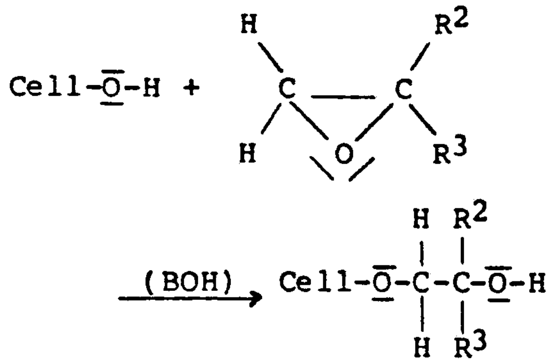


c) 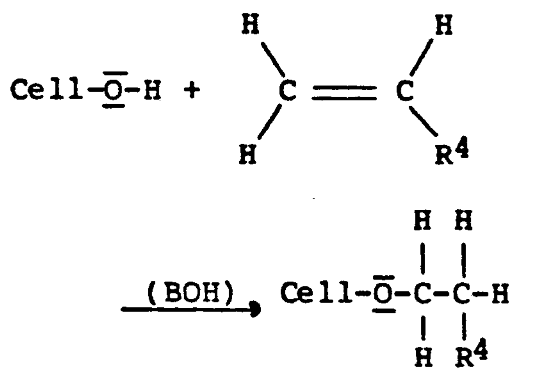


In diesen allgemeinen Gleichungen bedeuten:

Cell-$\underline{\overline{O}}$-H eine zu verethernde Hydroxylgruppe am Cellulosemolekül,

Hal Chlor oder Brom,

$R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$ oder einen N, N-Dialkylaminoalkylrest von $C_1$ bis $C_3$ für die Alkylgruppen,

$R^2$, $R^3$ Wasserstoff oder einen Alkylrest von $C_1$ bis $C_{13}$, wobei $R^2$ gleich $R^3$ oder davon verschieden ist,

BOH Base wie NaOH oder eine quaternäre Ammoniumbase,

$R^4$ einen gegebenenfalls N-substituierten Carbonsäureamid- oder Sulfonsäureamidrest oder einen Nitrilrest.

Durch gleichzeitiges oder stufenweises Einwirken von verschiedenen Veretherungsmitteln auf Cellulose werden auch Cellulosemischether hergestellt, wobei neben Reaktionen nach nur einer der angegebenen Varianten a bis c, insbesondere auch Reaktionen nach mindestens zwei der Varianten durchgeführt werden. Beispiele für Reaktionsprodukte, die nach der Variante a) hergestellt werden können, sind: Methylcellulose (MC), Benzylcellulose (BC), Carboxymethylcellulose (CMC), Sulfonoethylcellulose (SEC), Phosphonomethylcellulose (PMC) oder N,N-Diethylaminoethylcellulose (DEAEC). Beispiele für Reaktionsprodukte, die nach der Variante b) hergestellt werden können, sind: Hydroxyethylcellulose (HEC) oder Hydroxypropylcellulose (HPC). Beispiele für Reaktionsprodukte, die nach der Variante c) hergestellt werden können, sind: Sulfonamidoethylcellulose (SAEC) oder Cyanethylcellulose (CNEC). Zu den Mischethern der Cellulose, deren Herstellung nach der gleichen oder nach verschiedenen der angegebenen Varianten ablaufen kann, zählen beispielsweise Methylhydroxyethylcellulose (MHEC), Ethyl-hydroxyethylcellulose (EHEC), Hydroxyethyl-hydroxypropylcellulose (HEHPC), Methyl-carboxymethylcellulose (MCMC), Hydroxyethyl-phosphonomethylcellulose (HEPMC) oder Methyl-hydroxyethyl-hydroxypropylcellulose (MHEHPC). Unter dem Begriff "Celluloseether" sind im Rahmen der folgenden Ausführungen sowohl Produkte mit einem einheitlichen Substituenten wie Hydroxyethylcellulose als auch Produkte mit mindestens zwei verschiedenen Substituenten wie Methyl-carboxymethylcellulose zu verstehen.

Die meisten der bekannten Verfahren zur Herstellung von Celluloseethern werden in zwei Kernstufen durchgeführt:

1. Die Herstellung der "Alkalicellulose".
2. Die Veretherung des Cellulosemoleküls.

Zur Herstellung der "Alkalicellulose" wird Cellulose in kleinteiliger (z. B. gemahlener) Form in geeigneten technischen Aggregaten mit Wasser und Alkalihydroxiden (im allgemeinen NaOH, es sind aber auch andere Basen wie quaternäre Ammoniumbasen möglich) möglichst gleichmäßig vermischt. Die Alkalihydroxide können dabei in fester Form oder in Form einer wäßrigen Lösung zum Einsatz kommen. Für die Veretherungsreaktion selbst und damit für die Qualität des Reaktionsendprodukts ist die Gleichmäßigkeit und Intensität des Vermischens von entscheidender Bedeutung. Die Alkalisierung erfolgt im allgemeinen bei möglichst niedriger Temperatur, z. B. Raumtemperatur und weniger, um einen Abbau des Polymeren (das sogenannte "Reifen") zu unterdrücken; unter bestimmten Umständen, beispielsweise der späteren Herstellung niedrigviskoser Celluloseether, kann dieser Abbau jedoch auch erwünscht sein. In der Alkalisierungsstufe kann auch bereits das Veretherungsmittel zugegeben werden, wobei jedoch im allgemeinen zur Durchführung der eigentlichen Veretherungsreaktion die Temperatur noch erhöht werden muß.

Die eigentliche Veretherungsstufe wird im allgemeinen so durchgeführt, daß die in der ersten Stufe erzeugte Alkalicellulose zusammen mit dem inzwischen zugegebenen Veretherungsmittel auf Temperaturen zwischen 30° und 120°C erhitzt wird. Dabei kann auch vorher ein Teil des in der ersten Stufe vorhandenen Wassers entfernt werden. Auch in der zweiten Stufe ist eine intensive Durchmischung für die Qualität des Reaktionsprodukts und für die Wirtschaftlichkeit des Verfahrens sehr wichtig, da beispielsweise eine gute Substitutionsausbeute bei möglichst geringem Mengeneinsatz an Veretherungsmittel(n) angestrebt wird.

Für beide Reaktionsstufen sind sowohl kontinuierliche als auch diskontinuierliche Verfahrensweisen bekannt. Es können bei bestimmten Reaktionskomponenten auch beide Stufen so zusammengefaßt werden, daß keine Voralkalisierung der Cellulose stattfindet. Zur besseren Durchmischung des heterogenen Reaktionsgemenges können in beiden Stufen, oder zumindest in einer der beiden Stufen, Dispergierhilfsmittel (Suspensionsmittel) eingesetzt werden, wobei aus dem Stand der Technik sowohl wasserlösliche als auch in Wasser mehr oder weniger unlösliche organische Lösemittel bekannt sind, zu den bekanntesten gehören Isopropanol, tert.-Butanol, Methylethylketon oder auch aromatische Kohlenwasserstoffe wie Benzol oder Toluol.

Im Stand der Technik werden auch Verfahren zur Herstellung von wasserlöslichen Celluloseethern beschrieben, bei denen eine mit Ammoniak aktivierte Alkalicellulose zum Einsatz kommt:

In dem Aufsatz "Zum Einfluß einer Aktivierung von Cellulose mit Ammoniak auf deren anschließende Alkalisierung und Xanthogenierung" von Schleicher et al. in Faserforschung und Textiltechnik 24, 1973, Heft 9, S. 371 bis 376 wird ausgeführt, daß nach einer Aktivierung von Cellulose mit flüssigem Ammoniak oder wäßrigen Ammoniaklösungen im Vergleich zur unbehandelten Cellulose die Umwandlung zu Alkalicellulose bei niedrigeren NaOH-Konzentrationen erfolgen kann. Die Aktivierung erfolgt im allgemeinen bei Temperaturen zwischen 0 und -50 °C während etwa 30 min, das Aktivierungsmittel wird dann bei Raumtemperatur entfernt und danach wird die Alkalisierung eingeleitet. Als besonders günstig wird die Aktivierung mit flüssigem Ammoniak, das sich anschließende Abdampfen des Ammoniaks und die Trocknung bei Raumtemperatur vor der abschließenden Umsetzung angesehen.

Die Aktivierung von Cellulose mit Lösungen von Ammoniak in verschiedenen organischen Lösemitteln beschreiben Koura et al. im Aufsatz "Untersuchungen zur Quellung und Lösung von Cellulose in aminhaltigen Flüssigkeitsgemischen" in Faserforschung und Textiltechnik 24, 1973, Heft 2, S. 82 bis 86. Demnach können mit Lösemitteln wie Wasser, Dimethylsulfoxid, Formamid, Monoethanolamin oder Morpholin ähnliche Effekte erreicht werden wie mit flüssigem Ammoniak; dies gilt jedoch nicht für Lösungen von Ammoniak in Alkoholen wie Methanol oder Ethylenglykol, die zu keiner Strukturveränderung der Cellulose führen. Als chemische Reaktion mit den aktivierten bzw. nicht-aktivierten Cellulosen wird lediglich eine Veresterung durchgeführt.

In dem Autsatz "Herstellung alkalilöslicher Cyanäthylcellulose aus voraktivierter nativer Cellulose" von Koura et al. in Faserforschung und Textiltechnik 28, 1977, Heft 2, Seiten 63 bis 65 wird über die Celluloseetherherstellung (mit Cyanethylgruppen als Substituenten) aus mit flüssigem Ammoniak aktivierter Cellulose berichtet, wobei die Reaktionsprodukte auch bei einem niedrigen Substitutionsgrad (DS von 0,5 und weniger) bereits eine gute Löslichkeit in wäßriger NaOH-Lösung zeigen. Vor der Veretherungsreaktion wird der Ammoniak vollständig entfernt bzw. ausgewaschen.

Schleicher et al. führen in dem Aufsatz "Reaktivitätsbeeinflussung der Cellulose durch Aktivierung" in Das Papier, 34. Jahrgang, Heft 12, 1980, S. 550 bis 555 aus, daß sich für die Carboxymethylierung und Methylierung durch eine Ammoniakvorbehandlung keine oder nur geringe änderungen in der Anfangsgeschwindigkeit der Reaktion und dem erreichten Substitutionsgrad ergeben; es wird jedoch von einer geänderten Substituentenverteilung (Vergleichmäßigung) ausgegangen.

In dem Aufsatz "Zum Einfluß einer Voraktivierung auf die Carboxymethylierung der Cellulose" von Dautzenberg et al. in Acta Polymerica, 31 1980, Heft 10, S. 662 bis 667 wird festgestellt, daß eine Voraktivierung

von Cellulose mit $NH_3$ zu einer besseren Löslichkeit der entstehenden NaCMC führt. Diese Verbesserung in der Löslichkeit wird insbesondere dann beobachtet, wenn die Veretherung selbst in einem zusätzlich ein organisches Lösemittel wie Ethanol enthaltenden Cellulose/NaOH/Wasser-System durchgefuhrt wird. Der Effekt wird auf eine gleichmäßigere Substituentenverteilung zurückgeführt. Bei Durchführung der Reaktion wird a) der flüssige Ammoniak bei - 50 °C zur Einwirkung gebracht, b) der Ammoniak abgedampft, c) die aktivierte Cellulose alkalisiert und d) die Alkalicellulose mit dem Veretherungsmittel umgesetzt.

Das Verfahren zur Herstellung niedrigsubstituierter (DS von 0,5 und weniger) wasserlöslicher NaCMC gemäß der DD-PS 146 462 wird mit voraktivierter Cellulose mit den Stufen a) Aktivierung mit flüssigem Ammoniak bei -50 °C, b) Entfernen des Ammoniaks durch Abdampfen, c) Alkalisierung in einem NaOH/$H_2O$/Ethanol-System und d) Veretherung durchgeführt. Die in Wasser unlöslichen Anteile verringern sich im Reaktionsprodukt auf unter etwa 5 %, verglichen mit 12 bis 18 % bei Reaktionsprodukten, die aus nicht-voraktivierter Cellulose hergestellt werden.

Aus der DD-PS 148 342 ist bekannt, daß eine Voraktivierung von Cellulose mit flüssigem Ammoniak bei der Herstellung von NaCMC im DS-Bereich von 0,4 bis 0,7 zu einer um den Faktor 2 bis 5 erhöhten Viskosität führt. Die Reaktionsführung entspricht der in der DD-PS 146 462 dargestellten. Die aus der NaCMC herstellbaren wäßrigen Lösungen enthalten noch relativ große Anteile an Unlöslichem im Bereich von etwa 4 bis 15 %.

Aufgabe der vorliegenden Erfindung ist es, ein Verfahren zur Herstellung von wasserlöslichen, d.h. insbesondere zu mehr als 93 % wasserlöslichen, Celluloseethern vorzuschlagen, da zu Produkten mit einem guten Löslichkeitsverhalten und möglichst geringen Anteilen an unlöslichen Rückständen führt.

Die Erfindung geht aus von einem Verfahren zur Herstellung von wasserlöslichen Celluloseethern durch Aktivierung von Cellulose mit Ammoniak, Entfernen des Ammoniaks aus der aktivierten Cellulose, Alkalisierung der aktivierten Cellulose und Veretherung der Alkalicellulose in Gegenwart eines organischen Lösemittels. Das erfindungsgemäße Verfahren ist dann dadurch gekennzeichnet, daß die Alkalisierung der aktivierten Cellulose in einer wäßrigen Lösung eines Alkalihydroxids und in Gegenwart von Ammoniak sowie gegebenenfalls eines organischen Lösemittels durchgeführt, der Ammoniak aus der Alkalicellulose in Gegenwart des Alkalisierungsmittels und gegebenenfalls des organischen Lösemittels entfernt und die Veretherung in einem mindestens Teile des organischen Lösemittels enthaltenden Medium durchgeführt wird.

Die Aktivierung der Cellulose wird insbesondere mit flüssigem Ammoniak durchgeführt, bevorzugt bei einer unter seinem Siedepunkt ($Kp_{760}$) von etwa - 33 °C liegenden Temperatur. Aggregate zur Durchführung eines solchen Verfahrens sind von der Baumwoll-Veredelungstechnologie (z. B. ® Sanfor-Set-Verfahren) her bekannt, bei denen der verdampfende Ammoniak wieder rekondensiert und im Kreislauf geführt werden kann. Als organisches Lösemittel, das in einer bevorzugten Variante des erfindungsgemäßen Verfahrens zeitlich mindestens teilweise während der Entfernung des Ammoniaks aus der aktivierten Cellulose anwesend ist, kommt insbesondere ein Alkanol mit 1 bis 6 C-Atomen wie Isopropanol oder tert.-Butanol in Betracht, aber andere organische Lösemittel wie Alkylenglykole oder deren Mono-und Diether, Tetrahydrofuran, Dioxan, aromatische Kohlenwasserstoffe wie Benzol oder Toluol, aliphatische Ketone wie Aceton oder Alkane wie n-Heptan können ebenfalls eingesetzt werden; es sind aber auch Gemische dieser organischen Lösemittel möglich. Von den organischen Lösemitteln werden insbesondere 1 bis 50 Gew.-Teile pro Gew.-Teil Cellulose eingesetzt.

Das erfindungsgemäße Verfahren kann in allen Stufen diskontinuierlich oder auch kontinuierlich durchgeführt werden, in der Alkalisierungs- und Veretherungsstufe beispielsweise in einem der von der Celluloseetherchemie her bekannten Aggregate (z. B. Kneter, Rührkessel oder Wurfmischer). Wenn die Temperatur des Veretherungsgemisches so hoch gewählt wird, daß sie über der Siedetemperatur des organischen Lösemittel/$H_2O$-Gemisches liegt, empfiehlt sich die Durchführung des erfindungsgemäßen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Veretherungsmittel). Die in den folgenden Ausführungen angegebenen Mengenanteile für die Komponenten geben lediglich die Summe der Anteile der zur Reaktion erforderlichen Komponenten zu Beginn der Veretherungsstufe an, dann liegt z. B. bereits ein Teil der Cellulose und des Alkalimetallhydroxids als Alkalicellulose vor, oder wenn das Veretherungsmittel beispielsweise in der Säureform (z. B. Monochloressigsäure zur Herstellung von NaCMC) in das Reaktionsgemisch eingegeben wird, so müssen zur Neutralisation zusätzliche Basenanteile eingesetzt werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfaserig angelieferten Cellulose zu "Pulvern" erreicht werden kann.

Zur Alkalisierung wird ein Alkalimetallhydroxid - üblicherweise NaOH, aber auch KOH oder LiOH - in gelöster Form als wäßrige Alkalimetallhydroxid-Lösung (beispielsweise in 15 bis 50 gew.-%iger Form) eingesetzt. Sein Anteil beträgt im allgemeinen 0,5 bis 12,0 Mol, insbesondere 0,6 bis 6,0 Mol, pro Mol Cellulose (als Anhydro-D-glukose-Einheit gerechnet). Die Alkalisierung erfolgt in Gegenwart von Ammoniak und gegebenenfalls des organischen Lösemittels. Der Wasseranteil im Veretherungsgemisch wird zweckmäßig so gewählt, daß er im Bereich von 5 bis 25 Mol pro Mol Cellulose liegt; oder wenn als Bezugsgröße das Flüssigkeitsgemisch organisches Lösemittel/Wasser dienen soll, so liegt der Anteil des Wassers im Gemisch bei 3 bis 40 Gew.-%. Als Veretherungsmittel werden bevorzugt solche eingesetzt, die eine Carboxymethylierung oder eine Hydroxyethylierung bewirken, also insbesondere Monochloressigsäure, deren Salze und Ester oder Ethylenoxid;

aber auch andere Veretherungsmittel wie Alkylchloride oder Alkylenoxide wie Propylenoxid können zum Einsatz kommen. Der Anteil des Veretherungsmittels beträgt üblicherweise 0,05 bis 25 Mol, insbesondere 0,1 bis 10 Mol, pro Mol Cellulose. Der DS einer erfindungsgemäß hergestellten NaCMC liegt insbesondere bei 0,3 bis 0,8.

Bei der praktischen Durchführung der bevorzugten Verfahrensweise des erfindungsgemäßen Verfahrens wird die Cellulose zunächst mit flüssigem Ammoniak während etwa 3 bis 30 min bei einer Temperatur von etwa - 33 bis - 60 °C behandelt ("vorquellen"). Diesem Gemisch werden dann wäßrige NaOH-Lösung oder Wasser und festes NaOH und gegebenenfalls das organische Lösemittel zur Durchführung der Alkalisierung (Dauer etwa 10 bis 60 min) der aktivierten Cellulose unter Rühren zugegeben, dabei wird das Gemisch auf Raumtemperatur gebracht; die Zugabe des organischen Lösemittels kann bevorzugt auch zu einem späteren Zeitpunkt erfolgen, beispielsweise während der Entfernung des Ammoniaks, insbesondere nach der Entfernung des Hauptteils des Ammoniaks. Reste des Aktivierungsmittels Ammoniak können durch Abdestillieren kleinerer Mengen des organischen Lösemittels, bevorzugt unter vermindertem Druck, entfernt werden, wobei teilweise auch geringe Mengen Wasser "mitgehen" (z. B. durch azeotrope Destillation). Die alkalisierte Cellulose wird durch Zugabe des (der) jeweiligen Veretherungsmittel(s) umgesetzt, wobei auch noch änderungen an der qualitativen und quantitativen Zusammensetzung des Systems Wasser/NaOH/organische(s) Lösemittel möglich sind. Abschließend wird das rohe Reaktionsprodukt möglichst salzfrei gewaschen und getrocknet.

Die jeweiligen Reaktionsgemische und Reaktionsgefäße können bekanntermaßen auch mit Inertgasen wie Stickstoff gespült werden, um Sauerstoff zu entfernen und so hohe Viskositäten der Reaktionsprodukte zu erreichen; auch sogenannte Antioxidantien wie Pyrogallol oder Gallussäure können zur Verhinderung des Viskositätsabbaus (Depolymerisation) zugesetzt werden. Alle Stufen, insbesondere die nach der Aktivierung durchgeführten, werden in der Regel unter guter Durchmischung gefahren. In der Alkalisierungsstufe wird üblicherweise bei Raumtemperatur (von 0°, insbesondere von 15 bis 30 °C) gearbeitet, die Veretherung verläuft besonders erfolgreich bei einer Temperatur zwischen 30 und 120 °C, insbesondere bis zu 90 °C. Wenn das Verfahren ohne Einsatz von Druckaggregaten ablaufen soll, empfiehlt sich ein Arbeiten unterhalb der Siedetemperatur des oder der im Medium vorhandenen Lösemittel(s). Bei Einsatz von gasförmigem Veretherungsmittel (wie Ethylenoxid oder Methylchlorid) ist allerdings ein druckloses Arbeiten nicht zweckmäßig. Der sich maximal im Reaktionsgefäß einstellende Druck entspricht der Summe der Partialdrucke der Komponenten im Reaktionsgemisch.

Die erforderlichen Zeiten in der Veretherungsstufe liegen - je nach Reaktionstemperatur - im allgemeinen zwischen 30 min und 8 h. In einer Trennvorrichtung (z.B. einer Zentrifuge) wird das Rohprodukt, bevorzugt nach Zugabe von Säure bis zur Neutralisation der noch unverbrauchten Basen, zunächst vom Hauptteil der flüssigen Komponenten befreit und kann gegebenenfalls danach einer Extraktion zur Entfernung anhaftender Salze unterzogen werden; abschließend wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführliche Beschreibung.

Die nach dem erfindungsgemäßen Verfahren herstellbaren Celluloseether können auf den bekannten Gebieten der Technik eingesetzt werden, also beispielsweise als Verdickungsmittel, Klebstoff, Zusatzmittel auf dem Baustoffgebiet, Zusatzmittel auf dem Lebensmittelgebiet o. ä. Das erfindungsgemäße Verfahren zeichnet sich gegenüber den üblichen Verfahren zur Herstellung von Celluloseethern insbesondere dadurch aus, daß relativ weniger große Mengen an Alkalihydroxiden in der Alkalisierungs- und/ oder Veretherungsstufe eingesetzt werden müssen. Trotz dieser Reduzierung kommt es aber wahrscheinlich zu einer eher gleichmäßigeren Veretherung über die Molekülkette des Polysaccharids Cellulose und zu geringeren Anteilen an wasserunlöslichen Rückständen im Endprodukt. Eine der positiven Begleiterscheinungen dieser geringen Menge an erforderlichem Alkalihydroxid ist auch die entsprechend geringere Menge an Reaktionsnebenprodukten wie Salzen und/oder Hydrolyse- oder anderen Abbauprodukten der Reaktionskomponenten. Überraschenderweise sind die Reaktionsprodukte aber auch gegenüber solchen verbessert, die aus aktivierter Cellulose hergestellt werden und bei deren Herstellung der Ammoniak vor der Alkalisierung vollständig entfernt wird. Das Letztgenannte gilt insbesondere für die Verfahrensvariante, bei der während der Entfernung des Ammoniaks mindestens teilweise ein organisches Lösemittel wie ein Alkanol anwesend ist; dies war nicht ohne weiteres vorhersehbar, weil insbesondere das gleichzeitige Einwirken von Alkanolen und Ammoniak auf Cellulose als für die Aktivierung (siehe zitierter Stand der Technik in der Beschreibungseinleitung) unzweckmäßig und unwirksam angesehen wurde.

In den folgenden Beispielen verhalten sich Gew.-Teile zu Vol.-Teilen wie kg zu $dm^3$, die Prozentangaben sind auf das Gewicht bezogen. Der "DS" ist der Substitutionsgrad, d. h. die mittlere Anzahl von substituierten OH-Gruppen pro Anhydro-D-glucose-Einheit; er liegt bei Cellulose im Bereich von 0,0 bis 3,0. Der "MS" ist der molare Substitutionsgrad, d. h. die mittlere Anzahl von Molen des substituierenden Reagens, die pro Mol Anhydro-D-glucose-Einheit etherartig gebunden wurden; er kann bei Cellulose auch größer als 3,0 sein; er wird normalerweise anstelle des DS zur Charakterisierung solcher Substituenten am Celluloseether verwendet, die durch Mehrfachsubstitution an einer OH-Gruppe entstehen können, d. h. beispielsweise beim Hydroxyalkylsubstituenten, weil die entstehenden OH-Gruppen der Hydroxyalkylgruppen ebenfalls - wie die OH-Gruppen der Cellulose selbst - substituierbar sind.

**Beispiel 1**

6 Gew.-Teile Buchenzellstoff werden in 120 Vol.-Teilen flüssigem Ammoniak bei etwa - 33 °C während 10 min aktiviert ("vorgequollen"). Anschließend werden zu diesem Gemisch 3 Gew.-Teile einer 21,7%igen wäßrigen NaOH-Lösung gegeben, die Cellulose wird während etwa 30 min alkalisiert und anschließend werden 4 Vol.-Teile Wasser und 120 Vol.-Teile Isopropanol (in Form des wasserfreien Produkts) zugesetzt. Während dieser Stufen wird der Ammoniak unter Rühren abgedampft, wobei sich das Gemisch auf Raumtemperatur erwärmt. Durch das Abdestillieren von einigen Vol.-Teilen Isopropanol unter vermindertem Druck werden noch vorhandene Reste an Ammoniak aus dem Gemisch entfernt, dabei auch etwas Wasser azeotrop mitentfernt; die abdestillierte Isopropanolmenge wird wieder dem Reaktionsgemisch zugesetzt. Die Veretherung der aktivierten Alkalicellulose wird durch Zugabe von 3,45 Gew.-Teilen Natriummonochloracetat, gelöst in 4,8 Vol.-Teilen Wasser, zu dem Isopropanol, Wasser und Alkalicellulose enthaltenden Suspensionsmedium durchgeführt; es wird während 1 h auf 55 °C aufgeheizt und diese Temperatur während 2,5 h gehalten. Das rohe Reaktionsprodukt wird wie üblich aufgearbeitet. Die Eigenschaften des Endprodukts (NaCMC) sind der sich anschließenden Tabelle I zu entnehmen. Das Molverhältnis Cellulose: Veretherungsmittel: NaOH: $H_2O$ beträgt 1: 0,85: 0,935: 15.

**Vergleichsbeispiel V1**

Es wird nach den Angaben des Beispiels 1 verfahren, aber ohne die Aktivierungsstufe mit Ammoniak, d. h. der Zellstoff wird nur mit der angegebenen Menge des Alkalisierungsmittels in Gegenwart von Isopropanol ohne spezielle Wasserzugabe während 30 min bei Raumtemperatur verrührt. Das Abdestillieren des organischen Lösemittels entfällt.

**Vergleichsbeispiel V2**

Es wird nach den Angaben des Beispiels 1 verfahren, aber der Ammoniak wird vor der Alkalisierungsstufe vollständig entfernt, und die Alkalisierung wird in Gegenwart von Isopropanol ohne spezielle Wasserzugabe durchgeführt. Das Abdestillieren des organischen Lösemittels entfällt.

**Beispiel 2 und Vergleichsbeispiele V3 und V4**

Es wird nach den Angaben des Beispiels 1 und der Vergleichsbeispiele V1 und V2 verfahren, aber mit Baumwoll-Linters anstelle des Buchenzellstoffs.

**Beispiel 3 und Vergleichsbeispiele V5 und V6**

Es wird nach den Angaben des Beispiels 1 und der Vergleichsbeispiele V1 und V2 verfahren, aber mit der doppelten Menge wäßriger NaOH-Lösung, und als Veretherungsmittel werden 2,8 Gew.-Teile Monochloressigsäure ohne Wasseranteil zugesetzt. Der Molanteil des NaOH erhöht sich dadurch auf 1,87.

**Tabelle I**

| Beispiel | DS | Beurteilung einer 2%igen wäßrigen Lösung |
|---|---|---|
| 1 | 0,63 | gutes Auflöseverhalten, fast klare Lösung |
| V1 | 0,66 | viele ungelöste Fasern, trübe Lösung |
| V2 | 0,64 | ungelöste Fasern, trübe Lösung |
| 2 | 0,62 | gutes Auflöseverhalten, klare Lösung |
| V3 | 0,63 | viele ungelöste Fasern, sehr trübe Lösung |
| V4 | 0,63 | ungelöste Fasern, trübe Lösung |
| 3 | 0,63 | gutes Auflöseverhalten, fast klare Lösung |
| V5 | 0,63 | leichte Trübung |
| V6 | 0,68 | kaum Trübung |

**Beispiel 4 und Vergleichsbeispiele V7 und V8**

Es wird nach den Angaben des Beispiels 1 und der Vergleichsbeispiele V1 und V2 verfahren, aber mit 3,06 Gew.-Teilen einer 30%igen wäßrigen NaOH-Lösung und ohne spezielle Wasserzugabe alkalisiert. Die Veretherung wird mit 2,43 Gew.-Teilen des Natriummonochloracetats in 7,3 Vol.-Teilen Wasser durchgeführt. Die Eigenschaften der Endprodukte (NaCMC) sind der Tabelle II zu entnehmen. Die Molanteile Veretherungsmittel bzw. NaOH verringern sich auf 0,6 bzw. 0,66.

**Beispiel 5 und Vergleichsbeispiele V9 und V10**

Es wird nach den Angaben des Beispiels 1 und der Vergleichsbeispiele V1 und V2 verfahren, aber mit 11,1 Gew.-Teilen einer 15,7%igen wäßrigen NaOH-Lösung alkalisiert. Die Veretherung wird mit 1,97 Gew.-Teilen Monochloressigsäure als Veretherungsmittel durchgeführt. Die Molanteile Veretherungsmittel bzw. NaOH verändern sich auf 0,6 bzw. 1,26.

**Tabelle II**

| Beispiel | DS | Löserückstand in 0,5%iger wäßriger Lösung in % |
|---|---|---|
| 4 | 0,40 | 5 |
| V7 | 0,39 | 54 |
| V8 | 0,39 | 18 |
| 5 | 0,40 | 1 |
| V9 | 0,39 | 11 |
| V10 | 0,39 | 10 |

**Beispiel 6 und Vergleichsbeispiele V11 und V12**

Es wird nach den Angaben des Beispiels 1 und der Vergleichsbeispiele V1 und V2 verfahren, aber mit 8,66 Gew.-Teilen 13,7%iger wäßrigen NaOH-Lösung. Die Veretherung wird mit 6,9 Gew.-Teilen Ethylenoxid während 2 h bei 30 °C und während 4 h bei 70 °C unter Rühren in einem Reaktionsgefäß durchgeführt, das einen mit Kühlsole gekühlten Rüchkflußkühler aufweist. Die Eigenschaften des Endprodukts (HEC) sind der Tabelle III zu entnehmen. Das Molekülverhältnis Cellulose: Veretherungsmittel: NaOH: $H_2O$ beträgt 1: 4,5: 0,85: 11,9.

**Beispiel 7 und Vergleichsbeispiel V13**

Es wird nach den Angaben des Beispiels 6 und des Vergleichsbeispiels V11 (d. h. ohne Voraktivierung) verfahren, aber mit Baumwoll-Linters anstelle des Buchenzellstoffs.

**Tabelle III**

| Beispiel | MS | Beurteilung einer 2%igen wäßrigen Lösung |
|---|---|---|
| 6 | 2,80 | gutes Auflöseverhalten, klare Lösung |
| V11 | 2,44 | ungelöste Bestandteile, trübe Lösung |
| V12 | 2,51 | trübe Lösung |
| 7 | 2,55 | gutes Auflöseverhalten, klare Lösung |
| V13 | 2,05 | ungelöste Bestandteile, trübe Lösung |

**Patentansprüche**

1. Verfahren zur Herstellung von wasserlöslichen Celluloseethern durch Aktivierung von Cellulose mit Ammoniak, Entfernem des Ammoniaks aus der aktivierten Cellulose, Alkalisierung der aktivierten Cellulose und Veretherung der Alkalicellulose in Gegenwart eines organischen Lösemittels, dadurch gekennzeichnet, daß die Alkalisierung der aktivierten Cellulose in einer wäßrigen Lösung eines Alkalihydroxids und in Gegenwart von Ammoniak sowie gegebenenfalls eines organischen Lösemittels durchgeführt, der Ammoniak aus der Alkalicellulose in Gegenwart des Alkalisierungsmittels und gegebenenfalls des organischen Lösemittels entfernt umd die Veretherung in einem mindestens Teile des organischen Lösemittels enthaltenden Medium durchgeführt wird.

2. Verfahren nach Anspruch 1, dadurch gekennzeichnet, daß das organische Lösemittel ein Alkanol mit 1 bis 6 C-Atomen ist.

3. Verfahren nach Anspruch 1 oder 2, dadurch gekennzeichnet, daß die Aktivierung der Cellulose mit flüssigem Ammoniak durchgeführt wird.

4. Verfahren nach einem der Ansprüche 1 bis 3, dadurch gekennzeichnet, daß als Veretherung eine Carboxymethylierung oder Hydroxyethylierung durchgeführt wird.

5. Verfahren nach Anspruch 4, dadurch gekennzeichnet, daß bei der Carboxymethylierung eine Natriumcarboxymethylcellulose mit einem DS von 0,3 bis 0,8 hergestellt wird.

6. Verfahren nach einem der Ansprüche 1 bis 5, dadurch gekennzeichnet, daß als Alkalisierungsmittel eine wäßrige NaOH-Lösung eingesetzt wird.

**Claims**

1. Process for the preparation of water-soluble cellulose ethers, by activation of cellulose with ammonia, removal of the ammonia from the activated cellulose, alkalization of the activated cellulose and etherification of the alkali cellulose in the presence of an organic solvent, characterized in that the alkalization of the activated cellulose is effected in an aqueous solution of an alkali hydroxide and in the presence of ammonia and optionally, an organic solvent, the ammonia is removed from the alkali cellulose in the presence of the alkalizing agent and, optionally, the organic solvent and etherification is carried out in a medium which contains at least portions of the organic solvent.

2. A process as claimed in claim 1, wherein the organic solvent is an alkanol having from 1 to 6 carbon atoms.

3. A process as claimed in claim 1 or claim 2, wherein activation of the cellulose is carried out using liquid ammonia.

4. A process as claimed in any of claims 1 to 3, wherein etherification comprises carboxymethylation or hydroxyethylation.

5. A process as claimed in claim 4, wherein carboxymethylation results in a sodium carboxymethyl cellulose having a DS from 0.3 to 0.8.

6. A process as claimed in any of claims 1 to 5, wherein an aqueous NaOH solution is used as the alkalizing agent.

**Revendications**

1. Procédé pour la préparation d'éthers de cellulose solubles dans l'eau par activation de la cellulose avec de l'ammoniac, élimination de l'ammoniac de la cellulose activée, alcalinisation de la cellulose activée et éthérification de l'alcalicellulose en présence d'un solvant organique, caractérisé en ce que l'alcalinisation de la cellulose activée est effectuée dans une solution aqueuse d'un hydroxyde alcalin et en présence d'ammoniac et éventuellement d'un solvant organique, l'ammoniac est séparé de l'alcalicellulose en présence de l'agent d'alcalinisation et éventuellement du solvant organique, et l'éthérification a lieu dans un milieu contenant au moins une partie du solvant organique.

2. Procédé selon la revendication 1, caractérisé en ce que le solvant organique est un alcanol ayant de 1 à 6 atomes de carbone.

3. Procédé selon l'une des revendications 1 et 2, caractérisé en ce que l'activation de la cellulose est effectuée avec de l'ammoniac liquide.

4. Procédé selon l'une quelconque des revendications 1 à 3, caractérisé en ce que l'éthérification est une carboxyméthylation ou un hydroxyéthylation.

5. Procédé selon la revendication 4, caractérisé en ce que, pour la carboxyméthylation, on prépare une carboxyméthylcellulose de sodium avec un degré de substitution de 0,3 à 0,8.

6. Procédé selon l'une quelconque des revendications 1 à 5, caractérisé en ce que comme agent d'alcalinisation, on utilise une solution aqueuse de NaOH.